(19) Europäisches Patentamt
European Patent Office
Office européen des brevets

(11) **EP 4 332 699 B1**

(12) **EUROPÄISCHE PATENTSCHRIFT**

(45) Veröffentlichungstag und Bekanntmachung des Hinweises auf die Patenterteilung:
**08.04.2026  Patentblatt 2026/15**

(21) Anmeldenummer: **22193169.4**

(22) Anmeldetag: **31.08.2022**

(51) Internationale Patentklassifikation (IPC):
**G05B 19/042** (2006.01)  **G05B 19/418** (2006.01)
**G05B 23/02** (2006.01)

(52) Gemeinsame Patentklassifikation (CPC):
**G05B 19/042; G05B 19/418;** G05B 23/0272;
G05B 2219/24019; G05B 2219/31457;
G05B 2219/31472; G05B 2219/31478

(54) **OPERATOR-UNTERSTÜTZENDES LEITSYSTEM FÜR EINE TECHNISCHE ANLAGE UND BETRIEBSVERFAHREN**

OPERATOR-SUPPORTING CONTROL SYSTEM FOR A TECHNICAL INSTALLATION AND OPERATING METHOD

SYSTÈME DE GUIDAGE ASSISTÉ D'OPÉRATEUR POUR UNE INSTALLATION TECHNIQUE ET PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.03.2024  Patentblatt 2024/10**

(73) Patentinhaber: **Siemens Aktiengesellschaft 80333 München (DE)**

(72) Erfinder: **Lutz, Benjamin 76327 Pfinztal (DE)**

(74) Vertreter: **Siemens Patent Attorneys Postfach 22 16 34 80506 München (DE)**

(56) Entgegenhaltungen:
**EP-A1- 3 913 445    EP-A1- 4 047 433 WO-A1-2018/069853**

**Beschreibung**

Die Erfindung betrifft ein Leitsystem für eine technische Anlage, insbesondere Fertigungs- oder Prozessanlage. Außerdem betrifft die Erfindung ein Verfahren zum Betreiben eines Leitsystems einer technischen Anlage.

Für die Bedienung und Beobachtung großer verfahrenstechnischer Anlagen werden Operatoren (d.h. Personen zur Bedienung und Beobachtung der Anlage) symbolische Anlagenbilder angeboten, die die verfahrenstechnischen Zusammenhänge - insbesondere zwischen Objekten eines in der Anlage ablaufenden Prozesses (in Folgenden als "Prozessobjekte" bezeichnet) - abstrahiert darstellen.

Anlagenbilder setzen sich beispielsweise aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Block-Symbolen (zur dynamisierten Visualisierung verfahrenstechnischer Prozessobjekte), komplexen Controls (z.B. Trendanzeigen, Meldefolgeanzeigen, usw.) und Containern, um Inhalte aus unabhängigen und eigenständige Quellen visualisieren zu können (z.B. Anlagenbilder modularer Anlagenteile (Package Units), Apps (z.B. Regleroptimierer, KPI Berechnungen)) zusammen.

Auch wenn Anlagenbilder mit ihren Inhalten effizient für Operatoren erstellt worden sind, gestaltet sich die Bedienung und Beobachtung oftmals schwierig, da die verfahrenstechnischen Zusammenhänge sehr komplex sind.

Zur Vereinfachung der Bedienung und Beobachtung ist beispielsweise aus der EP 3 876 046 A1 ein Leitsystem einer technischen Anlage bekannt, welches eine Anpassung einer durch einen Operator Station Client erfolgten Darbietung von Visualisierungsinformationen durch einen Operator zu einer Laufzeit der technischen Anlage ermöglicht. Beispielsweise kann der Operator an einem Anlagenbild, d.h. einer grafischen Repräsentation der Anlage bzw. ihrer Komponenten, Änderungen bzw. Anpassungen vornehmen, in dem er Trendanzeigen und/oder Meldefolgen selektiert. Eine derartige Änderung wird als eine "Anwenderselektion" bezeichnet.

Aus der EP 3 637 205 A1 ist ein Leitsystem einer technischen Anlage bekannt, bei dem von einem ersten Bediener eines ersten Operator Station Clients, der mit einem Operator Station Server verbunden ist, vorgegebene Bedieninformationen zur Laufzeit der technischen Anlage derart in einem Speicher hinterlegt werden, dass diese zur Konfiguration einer Bildanzeige für einen zweiten Bediener eines zweiten Operator Station Clients abrufbar und verwendbar sind.

Die EP 3 913 445 A1 offenbart ein Leitsystem einer technischen Anlage gemäß Oberbegriff des Patentanspruchs 1 bzw. ein Verfahren gemäß Oberbegriff des Patentanspruchs 10, bei dem bei Vorliegen einer beispielsweise im Engineering festgelegten Bedingung (z.B. ein Alarm) automatisch ein Trendverlauf eines Messwertes erzeugt und einem Operator dargeboten wird.

Im Fall von EP 4 047 433 A1 kann ein Operator zur Laufzeit einer Anlage Bedingungen für Zustände von Messeinrichtungen definieren, bei deren Vorliegen er automatisch notifiziert wird.

Mit diesen Lösungen kann der Operator bereits sehr gut bei der Bedienung und Beobachtung der Anlage unterstützt werden.

Wegen der hohen Komplexität der verfahrenstechnischen Zusammenhänge bestehen für den Operator aber weiterhin Herausforderungen.

Beispielsweise müssen für die Behandlung eines Alarms oftmals mehrere Prozessobjekte in unterschiedlichen Dokumenten auf bestimmte Zustände geprüft werden, um die folgerichtige Handlung an den dafür geeigneten Objekten vornehmen zu können. Neben Erfahrung ist hierfür eine detaillierte, stets aktuelle und jederzeit verfügbare Dokumentation notwendig - was jedoch nach dem Stand der Technik nicht immer gewährleistet werden kann.

Insbesondere der Trend hin zu flexiblen Anlagenstrukturen durch die Modularisierung über Package Units (z.B. den im Rahmen der Interessengemeinschaft Automatisierungstechnik der Prozessindustrie NAMUR entwickelten Module Type Packages bzw. MTPs) mit der Möglichkeit den verfahrenstechnischen Prozess im Lebenszyklus der Anlage dynamisch und partiell rekonfigurieren zu können, stellt an Operatoren neue Herausforderungen in Hinblick auf Flexibilität und Effizienz bei der Bedienung und Beobachtung der Anlage.

Ausgehend hiervon liegt der Erfindung die Aufgabe zugrunde, ein Leitsystem und ein Verfahren zum Betreiben eines Leitsystems für eine technische Anlage anzugeben, welches einem Operator eine noch flexiblere und effizientere Bedienung und Beobachtung der Anlage ermöglicht.

Diese Aufgabe wird gelöst durch Leitsystem für eine technische Anlage mit den Merkmalen des Anspruchs 1. Außerdem wird die Aufgabe gelöst durch ein Verfahren zum Betreiben eines Leitsystems einer technischen Anlage gemäß Anspruch 10. Vorteilhafte Ausgestaltungen sind jeweils Gegenstand der Unteransprüche.

Ein erfindungsgemäßes Leitsystem für eine technische Anlage, insbesondere Fertigungs- oder Prozessanlage, umfasst wenigstens einen Operator Station Server und wenigstens einen mit dem Operator Station Server verbundenen Operator Station Client, wobei der Operator Station Server dazu ausgebildet ist, Visualisierungsinformationen an den Operator Station Client zu übertragen, und wobei der Operator Station Client dazu ausgebildet ist, mittels der Visualisierungsinformationen eine grafische Darbietung für einen Operator der technischen Anlage zu erzeugen. Der Operator Station Client ist hierbei dazu ausgebildet, zur Laufzeit der Anlage eine von dem Operator vorgebbare Anweisung für eine Operatoraktivität in Bezug auf die Anlage und eine von dem Operator vorgebbare Bedingung, die in Bezug zu einem internen Zustand der Anlage steht, für die Anweisung entgegenzunehmen und an den Operator Station Server zu übermitteln, wobei die Bedingung einen internen Zustand der Anlage betrifft und wobei die Anweisung für eine Operatoraktivität eine Führung für eine Interaktion mit dem Leitsystem ist, und der Operator Station Server ist dazu ausgebildet, die von dem Operator Station Client empfangene Anweisung und Bedingung in einem Speicher zu hinterlegen und (vorzugsweise automatisiert) zu prüfen, ob die Bedingung erfüllt ist.

Der Operator hat somit die Möglichkeit, mittels des Operator Station Client flexibel zur Laufzeit der Anlage, und unter Berücksichtigung der zu einem bestimmten Zeitpunkt im Lebenszyklus der Anlage vorliegenden Konfiguration der Anlage, Anweisungen für Operatoraktivitäten und eine Bedingung für die Anweisung in dem Leitsystem zu definieren und in dem Speicher zu hinterlegen. Der Operator Station Server kann dann während des Betriebes der Anlage prüfen (vorzugsweise automatisiert, oder beispielsweise initiiert durch den Operator), ob die Bedingung erfüllt ist.

Für den Fall, dass die Bedingung erfüllt ist, kann dann dem Operator die Anweisung unmittelbar ausgegeben werden. Alternativ kann dem Operator in einem ersten Schritt nur eine Benachrichtigung über das Vorliegen einer Anweisung ausgegeben werden, und dieser kann dann darauf aufbauend bei Bedarf in einem zweiten Schritt eine Ausgabe der Anweisung veranlassen.

Dem Operator (oder anderen Operatoren) kann somit eine detaillierte, stets aktuelle und jederzeit verfügbare Dokumentation zur Verfügung gestellt werden, auf deren Basis er folgerichtige Handlungen an dafür geeigneten Objekten der Anlage vornehmen kann. Abläufe, Routinehandlungen, Einstellungen, zyklische Prüfungen, Alarmbehandlungen, usw. können hierdurch noch besser dokumentiert, koordiniert und optimiert werden.

Hiermit können sich Operatoren noch flexibler und effizienter auf die Bedienung und Beobachtung komplexer verfahrenstechnischer Anlagen einstellen, insbesondere falls diese modular für im Lebenszyklus sich ändernden Konfigurationen der Anlage ausgelegt sind.

Beispiele für Anweisungen für Operatoraktivtäten sind Prüfungs- und Handlungsanweisungen, wie z.B.

- prüfe den Füllstand in einem Tank auf Überscheiten einer bestimmten Höhe, falls diese Höhe unterschritten wird, schließe ein Ablaufventil,
- prüfe den Durchfluss in einem Rohr auf Unterschreiten eines bestimmten Wertes, falls dieser Wert überschritten wird, öffne ein Zulaufventil.

Die Anweisungen bzw. die Operatoraktivitäten können den Operator dann durch eine geführte Interaktion mit dem Leitsystem bei der Bedienung und Beobachtung der Anlage (z.B. bei der Behandlung von Alarmen) unterstützen. Der Operator wird mittels der Anweisungen veranlasst, mit dem Leitsystem bzw. der Anlage zu interagieren, z.B. um technische Fehlfunktionen in der Anlage zu vermeiden oder zu beheben.

Die Bedingung für die Anweisung betrifft dabei einen in der Anlage vorherrschenden internen Zustand. Dieser interne Zustand kann beispielsweise einen Betriebszustand der gesamten Anlage oder nur eines technischen Objektes der Anlage, ein Alarm, eine Parameteränderung eines technischen Objektes der Anlage, ein Erreichen eines bestimmten Zustandes einer von der Anlage abzuarbeitenden Schrittfolge oder ein Erreichen eines bestimmten Gütekriteriums beim Betrieb der Anlage betreffen.

Der Speicher kann ein Speicher des Leitsystems oder ein cloudbasierter Speicher außerhalb des Leitsystems sein. Bevorzugt ist der Speicher dabei ein Speicherbereich eines Operator Station Servers des Leitsystems.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Die technischen Anlagen können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus weist das Leitsystem u.a. Mittel zur Visualisierung der technischen Anlage und zu einem Engineering auf. Das Leitsystem kann optional auch weitere Recheneinheiten für komplexere Regelungen und Systeme zur Datenspeicherung und -verarbeitung umfassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer, ein Rechner mit einer Großbildanzeige in einer Leitwarte oder dergleichen sein kann, zum Zwecke eines Bedienens und Beobachtens der technischen Anlage auf den Operator Station Server zugreifen.

Unter einer Visualisierung wird vorliegend die grafische Darbietung verstanden, die für den Operator durch den Operator Station Client erfolgt. In der Regel verfügt der Operator Station Client über entsprechende Funktionalitäten, einschlägige Visualisierungsinformationen, die er vom Operator Station Server erhält, zur Erzeugung der beabsichtigten Visualisierung zu nutzen.

Dabei kann die Visualisierung allgemein in an sich bekannter Weise eine grafische Wiedergabe eines Anlagenbildes der technischen Anlage, grafische Fenster mit Verlaufsanzeigen von Messwerten (z.B. Trendanzeigen) der technischen Anlage, Meldungsanzeigen, grafische Objekte, die technische Objekte der technischen Anlage repräsentieren, Textfelder für Eingaben des Operators wie z.B. für Stellwerte eines Reglers und dgl. umfassen. Im Falle einer Prozessanlage kann das Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

Die Anweisung bezieht sich dabei von Vorteil auf von dem Operator zur Laufzeit der Anlage vorgebbare Objekte (z.B. Prozessobjekte) und/oder Dokumente (z.B. Anlagenbilder, Schrittketten) der Anlage. Vorzugsweise kann der Operator hierzu - beispielsweise aus einer in dem Leitsystem hinterlegten und stets aktuell gehaltenen technologischen Hierarchie - Objekte und/oder Dokumente selektieren und für diese dann Anweisungen für Operatoraktivitäten definieren und hinterlegen.

Gemäß einer vorteilhaften Ausgestaltung ist der Operator Station Server dazu ausgebildet sein, für den Fall, dass die Bedingung erfüllt ist, die Visualisierungsinformationen derart zu modifizieren, dass die graphische Darbietung des Operator Station Client die Anweisung ausgibt. Mit anderen Worten wird dem Operator die Anweisung dann gleich unmittelbar durch den Operator Station Client dargeboten.

Alternativ kann der Operator Station Server aber auch dazu ausgebildet sein, für den Fall, dass die Bedingung erfüllt ist, die Visualisierungsinformationen derart zu modifizieren, dass die graphische Darbietung des Operator Station Client eine Benachrichtigung über die Anweisung ausgibt. Dem Operator wird die Anweisung somit noch nicht unmittelbar durch den Operator Station Client dargeboten, sondern er erhält in einem ersten Schritt nur eine Benachrichtigung über das Vorliegen einer Anweisung, und kann dann darauf aufbauend bei Bedarf in einem zweiten Schritt eine (unmittelbare) Ausgabe der Anweisung veranlassen.

Für den zweiten Schritt ist der Operator Station Client vorzugsweise dazu ausgebildet, eine Aufforderung des Operators für eine Ausgabe der Anweisung zu empfangen und an den Operator Station Server zu übermitteln, und der Operator Station Server ist ausgebildet, nach Empfang der Aufforderung die Visualisierungsinformationen derart zu modifizieren, dass die graphische Darbietung des Operator Station Client die Anweisung ausgibt.

Gemäß einer weiteren vorteilhaften Ausgestaltung umfasst die grafische Darbietung ein Anlagenbild mit grafischen Repräsentanten von Objekten der technischen Anlage. Der Operator kann somit die Anweisung mit direktem Bezug zu einem Bild der aktuellen Anlagenkonfiguration sehen und somit besonders effizient bei der Bedienung und Beobachtung unterstützt werden.

Die Bedingung kann dabei ein Ereignis oder eine logische Verknüpfung einer Mehrzahl von Ereignissen darstellen.

Ein Ereignis kann beispielsweise eine Parameteränderung eines technischen Objektes der Anlage, ein Betriebszustand eines technischen Objektes der Anlage, ein Erreichen eines bestimmten Zustandes einer von der Anlage abzuarbeitenden Schrittfolge oder ein Erreichen eines bestimmten Gütekriteriums beim Betrieb der Anlage darstellen.

Vorzugsweise stellt ein Ereignis ein Auftreten eines Alarms dar. Der Alarm bezieht sich dann vorzugsweise auf ein von dem Operator zur Laufzeit der Anlage vorgebbares Objekt (z.B. ein Prozessobjekt) der Anlage. Der Operator kann hierzu vorzugsweise aus einer aktuellen technologischen Hierarchie der Anlage Pfade definieren, die beispielsweise über Prozessobjekte definiert werden, und diese Pfade mit Anweisungen für Operatoraktivitäten assoziieren. Tritt in der technologischen Hierarchie unterhalb der Alarmpfade dann ein Alarm auf, wird eine Anweisung für eine Operatoraktivität ausgegeben, die beschreibt, mit welchen Dokumenten und Objekten und mit welcher Vorgehensweise der Alarm behandelt werden kann.

Die erfindungsgemäße Aufgabe wird auch gelöst durch ein Verfahren zum Betreiben eines Leitsystems einer technischen Anlage, insbesondere Fertigungs- oder Prozessanlage, das wenigstens einen Operator Station Server und wenigstens einen Operator Station Client umfasst, wobei der Operator Station Server dazu ausgebildet, Visualisierungsinformationen an den Operator Station Client zu übertragen, und wobei der Operator Station Client dazu ausgebildet ist, mittels der Visualisierungsinformationen eine grafische Darbietung für einen Operator der technischen Anlage zu erzeugen, wobei das Verfahren umfasst:

a) Von einem Operator der technischen Anlage entgegennehmen einer Anweisung für eine Operatoraktivität in Bezug auf die Anlage und einer Bedingung für die Anweisung durch den Operator Station Client, wobei die Bedingung einen internen Zustand der Anlage betrifft, und wobei die Anweisung für eine Operatoraktivität eine Führung für eine Interaktion mit dem Leitsystem ist,
b) Übertragen der Anweisung und der Bedingung von dem Operator Station Client an den Operator Station Server,
c) Hinterlegen der Anweisung und der Bedingung in einem Speicher,
d) Prüfen der Erfüllung der Bedingung durch den Operator Station Server.

Gemäß einer vorteilhaften Ausgestaltung bezieht sich die Anweisung auf von dem Operator zur Laufzeit der Anlage vorgebbare Objekte (z.B. Prozessobjekte) und/oder Dokumente (z.B. Anlagenbilder, Schrittketten) der Anlage.

Gemäß einer weiteren vorteilhaften Ausgestaltung modifiziert der Operator Station Server für den Fall, dass die Bedingung erfüllt ist, die Visualisierungsinformationen derart, dass die graphische Darbietung des Operator Station Client die Anweisung (unmittelbar) ausgibt.

Gemäß einer weiteren vorteilhaften Ausgestaltung modifiziert der Operator Station Server für den Fall, dass die Bedingung erfüllt ist, die Visualisierungsinformationen derart, dass die graphische Darbietung des Operator Station Client eine Benachrichtigung über die Anweisung ausgibt.

Der Operator Station Client empfängt dann von Vorteil eine Aufforderung des Operators für eine Ausgabe der Anweisung und übermittelt diese dann an den Operator Station Server, wobei der Operator Station Server nach Empfang der Aufforderung die Visualisierungsinformationen derart modifiziert, dass die graphische Darbietung des Operator Station Client die Anweisung (unmittelbar) ausgibt.

Die für das erfindungsgemäße Leitsystem genannten Vorteile gelten entsprechend für das erfindungsgemäße Verfahren.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:

FIG 1    eine Operator-Visualisierung zur Bedienung und Beobachtung einer Anlage auf einem Operator Station Client;

FIG 2    einen erfindungsgemäßen Verfahrensablauf;

FIG 3    eine Operator-Visualisierung zur Definition einer Anweisung für eine Operatoraktivität auf einem Operator Station Client;

FIG 4    eine Operator-Visualisierung mit einer Ausgabe einer Benachrichtigung über das Vorliegen einer Anweisung für eine Operatoraktivität auf einem Operator Station Client;

FIG 5    eine Operator-Visualisierung mit einer Ausgabe einer Anweisung für eine Operatoraktivität auf einem Operator Station Client;

FIG 6    ein erfindungsgemäßes Leitsystem in einer schematischen Darstellung.

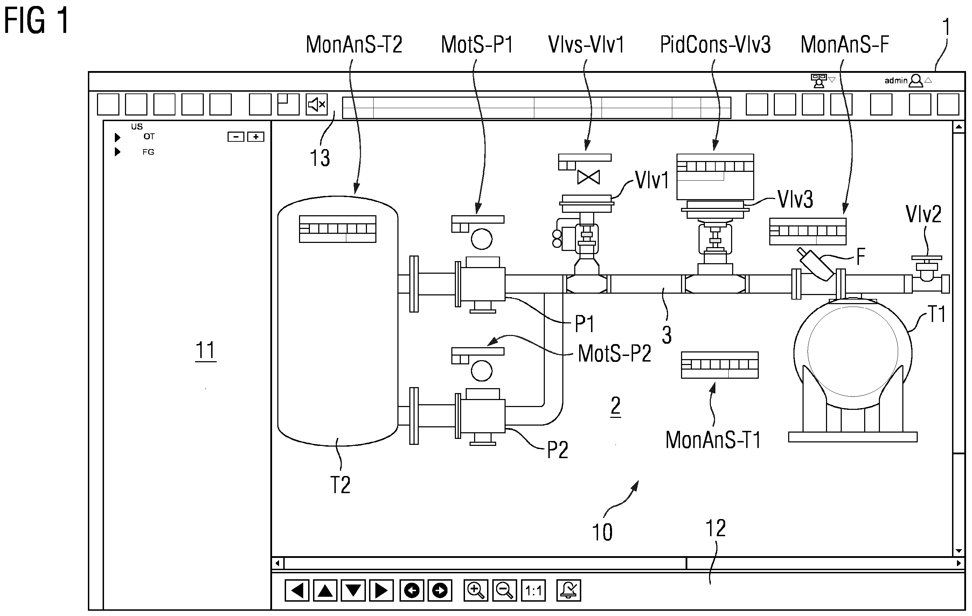

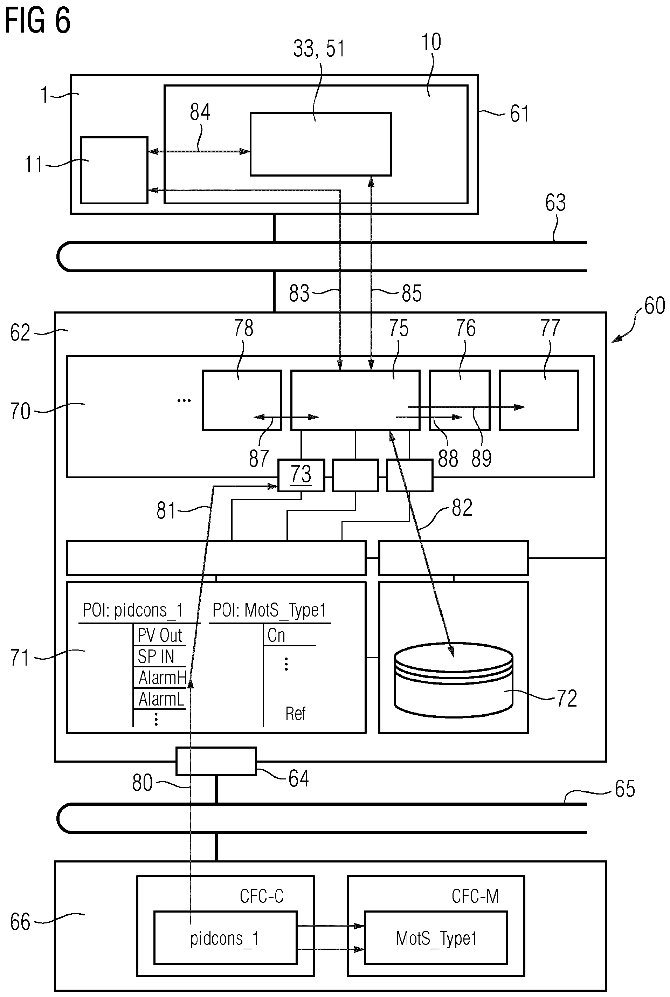

In FIG 1 ist eine Visualisierung bzw. grafische Darbietung 1 dargestellt, welche ein Operator Station Client (vgl. FIG 6) einem Operator einer Prozessanlage zur Bedienung und Beobachtung der Prozessanlage darbietet.

Die grafische Darbietung 1 umfasst als zentralen Bestandteil eine Anlagenvisualisierung 10. Weiterhin umfasst sie in einem linken Bereich eine Anwenderselektionssicht 11, in einem unteren Bereich ein Operator-Bedienfeld 12 und in einem oberen Bereich ein Alarmfeld 13.

Die Anlagenvisualisierung 10 umfasst ein Anlagenbild 2 mit grafischen Repräsentationen von Rohrleitungen 3 und Prozessobjekten wie Tanks oder Kessel T1, T2, Pumpen P1, P2, Ventilen Vlv1, Vlv2, Vlv3 und Durchflussmesser F. Weiterhin umfasst das Anlagebild grafischen Repräsentationen zugehöriger Mess-, Regel- oder Ansteuerbausteine wie z.B. MonAnS-T1 (Überwachungsbaustein für einen analogen Messwert des Füllstands im Tank T1), MotS-P1 (Ansteuerbaustein für Pumpenmotor P1), PidCons-Vlv3 (PID-Regler-Baustein für steuerbares Ventil Vlv3) oder Vlvs-Vlv1 (Ventilansteuerungsbaustein für Ventil Vlv1) mit einer Ausgabe jeweils zugehöriger aktueller Prozessmesswerte, Statuswerte, (Alarm-)Meldungen oder dergleichen.

Die Anlagenvisualisierung 10 kann weiterhin beispielsweise sogenannte Faceplates, Trendkurven für Messwerte sowie Alarmmeldeanzeigen umfassen.

Die Anlagenvisualisierung 10 kann dabei von dem Operator individuell in Hinblick auf seine aktuelle Bedien- und Beobachtungsaufgaben erzeugt werden, die wiederum von dem aktuellen Anlagenzustand abhängen.

Für das Öffnen, Auswählen und Positionieren der verschiedenen Visualisierungsobjekte sind eine Anzahl von Eingaben des Operators möglich, die er z.B. mittels einer grafischen Benutzeroberfläche und Benutzerdialogen erledigen kann, die ihm der Operator Station Client bzw. die auf diesem ausgegebene grafische Darbietung bzw. Visualisierung 1 ermöglicht. Eine derartige individuelle Erzeugung einer grafischen Darbietung bzw. Visualisierung ist ein Beispiel für eine sogenannte "Anwenderselektion".

In der Anwenderselektionssicht 11 werden dem Operator für einen späteren Wiederaufruf Informationen zu von ihm hinterlegten Anwenderselektionen US visuell dargestellt. Hierzu zählen beispielsweise Online Trends OT oder Faceplate-Gruppen FG.

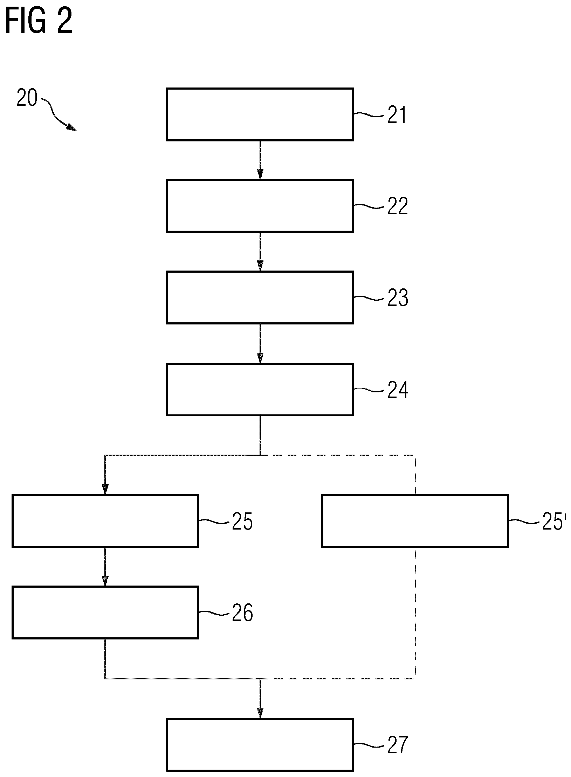

Wie anhand von FIG 2 - 6 erläutert wird, werden zur Unterstützung des Operators für eine flexible und effiziente Bedienung und Beobachtung der Anlage die Anwenderselektionen nun um eine neue Kategorie der "Operatoraktivitäten" OA erweitert. Der Operator kann dann zur Laufzeit der Anlage Anweisungen für Operatoraktivitäten mit Bezug zur Anlage definieren sowie eine Bedingung, die einen internen Zustand der Anlage betrifft, für eine Ausgabe der Anweisung in der grafischen Darbietung 1 definieren.

Die Operatoraktivitäten können sich beispielsweise auf Prüfungen, Einstellungen, Änderungen von Parametern, Änderungen von Betriebszuständen von technischen Objekten der Anlage usw. beziehen.

Wenn die Bedingung erfüllt ist, wird die Anweisung in der grafischen Darbietung 1 unmittelbar oder mittelbar ausgeben und hierdurch der Operator bei der Bedienung und Beobachtung der Anlage unterstützt und angeleitet.

Dies soll im Detail anhand des Verfahrensablaufes 20 von FIG 2 erläutert werden.

In einem ersten Schritt 21 wird durch den Operator Station Client 61 (siehe FIG 6) von einem Operator eine Anweisung für eine Operatoraktivität in Bezug auf die Anlage und eine Bedingung, die einen internen Zustand der Anlage betrifft, für die Anweisung entgegengenommen. Bei der Bedingung bzw. dem internen Zustand der Anlage handelt es sich vorzugsweise um ein Ereignis oder eine logische Verknüpfung einer Mehrzahl von Ereignissen, wie z.B. ein Auftreten eines Alarms, ein Betriebszustand der gesamten Anlage oder nur eines technischen Objektes der Anlage, eine Parameteränderung eines technischen Objektes der Anlage, ein Erreichen eines bestimmten Zustandes einer von der Anlage abzuarbeitenden Schrittfolge oder ein Erreichen eines bestimmten Gütekriteriums beim Betrieb der Anlage.

In einem zweiten Schritt 22 werden die Anweisung und die Bedingung von dem Operator Station Client 61 an einen Operator Station Server 62 (siehe FIG 6) übertragen.

In einem dritten Schritt 23 werden die Anweisung und die Bedingung in einem Speicher 72 des Operator Station Servers 62 hinterlegt.

In einem vierten Schritt 24 prüft der Operator Station Server 62 automatisiert die Erfüllung der Bedingung.

In einem fünften Schritt 25 modifiziert der Operator Station Server 62 für den Fall, dass die Bedingung erfüllt ist, die Visualisierungsinformationen derart, dass die graphische Darbietung des Operator Station Client 61 eine Benachrichtigung über die Anweisung ausgibt.

In einem sechsten Schritt 26 empfängt der Operator Station Client 61 eine Aufforderung des Operators für eine Ausgabe der Anweisung und übermittelt diese an den Operator Station Server 62, wobei der Operator Station Server 62 nach Empfang der Aufforderung die Visualisierungsinformationen derart modifiziert, dass die graphische Darbietung 1 des Operator Station Client 61 die Anweisung ausgibt.

Alternativ zu den Schritten 25 und 26 kann für den Fall, dass die Bedingung erfüllt ist, in einem Schritt 25' der Operator Station Server 62 die Visualisierungsinformationen auch gleich derart modifizieren, dass die graphische Darbietung 1 des Operator Station Client 61 die Anweisung unmittelbar ausgibt.

In einem siebten Schritt 27 bedient und beobachtet der Operator die Anlage dann entsprechend der ausgegebenen Anweisungen und ändert hierdurch ggf. auch den internen Zustand der Anlage.

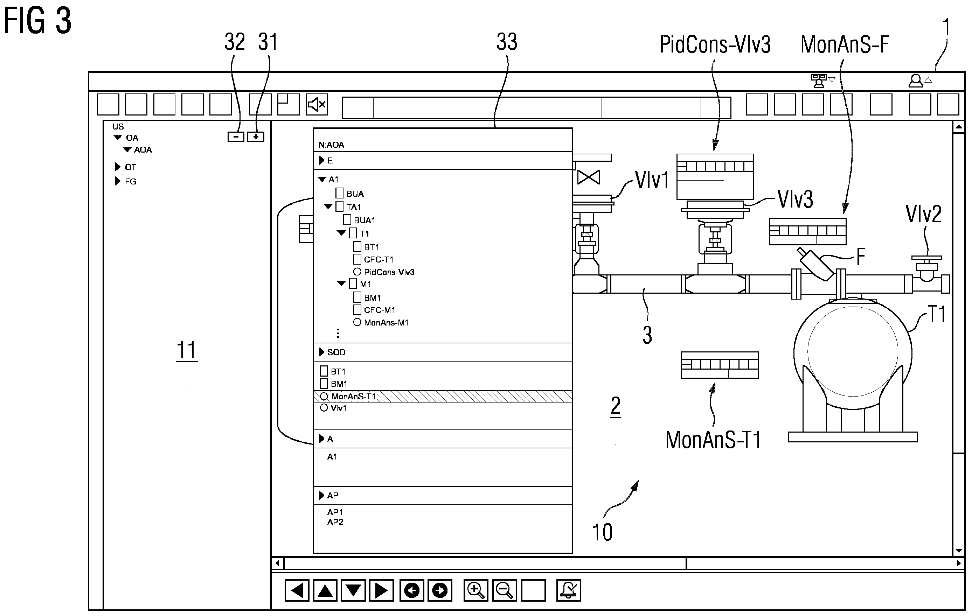

Wie in FIG 3 gezeigt ist, sind im Fall des Ausführungsbeispiels von FIG 1 in der Anwenderselektionssicht 11 die Anwenderselektionen um die Kategorie der Operatoraktivitäten OA erweitert. Durch Anwahl des "+"-Feldes 31 kann der Operator hierüber zur Laufzeit der Anlage neue Instanzen von Anweisungen AOA für Operatoraktivitäten und zugehörige Bedingungen für deren Ausgabe anlegen, durch Anwahl des "-"-Feldes 32 auch wieder löschen und durch Anwahl der Anweisung AOA selbst bearbeiten.

Wenn im Fall des Ausführungsbeispiels von FIG 3 der Operator eine neue Instanz einer Anweisungen AOA für eine Operatoraktivität anlegt, so öffnet sich in der grafischen Darbietung 1 ein Dialogfenster 33 (Operator Activity Browser), in dem der Operator die Anweisung für die Operatoraktivität konfigurieren kann. Das Dialogfenster 33 umfasst beispielsweise die folgenden Abschnitte:

a)

$$N \ (= \ Name):$$

Name der Anweisung für eine Operatoraktivität, hier AOA (z.B. "Bei Tankfüllstand niedrig")

b)

## E (= Ausrüstung):

Eine aktuelle technologische Hierarchie der Anlage, aus der der Operator Objekte (z.B. Prozessobjekte), Dokumente (z.B. Anlagenbilder, Schrittketten, ...) oder Pfade (z.B. Anlage1/Mischer1) für die Konfiguration der Operatoraktivität wählen und selektieren kann.

In FIG 3 sind dabei als vom Operator selektierbare Prozessobjekte mit A1 eine Anlage 1, mit TA1 eine Teilanlage TA1 der Anlage 1, mit T1 ein Tank der Teilanlage TA1 und mit M1 ein Mischer der Teilanlage T1 bezeichnet. Mit PidCons-Vlv3 ist ein PID-Regler-Baustein für das steuerbare Ventil Vlv3 zur Steuerung des Füllstands im Tank T1 und mit MonAnS-M1 ein Überwachungsbaustein für einen analogen Messwert in Bezug auf den Mischer M1 bezeichnet. Weiterhin sind als vom Operator selektierbare Dokumente mit BT1 ein Bild vom Tank T1, mit CFC-T1 ein Continuous Function Chart (Signalflussplan) vom Tank T1, mit BM1 ein Bild vom Mischer M1 und mit CFC-M1 ein Continuous Function Chart (Signalflussplan) vom Mischer M1 bezeichnet (der Mischer M1 ist zur Vereinfachung in den Figuren nicht dargestellt).

c)

## SOD (= Ausgewählte Objekte und Dokumente):

Eine Liste an Objekten und Dokumenten, die der Operator für seine Aktivität aus dem Abschnitt E der Ausrüstung zusammenstellt, z.B. wie dargestellt bestehend aus dem Bild BT1 des Tanks T1, dem Bild BM1 des Mischers M1, dem analogen Messwert MonAnS-T1 in Bezug auf den Tank T1 sowie dem Ventil Vlv1.

d)

## A (= Handlungsanweisung):

Für jedes der im Abschnitt SOD selektierten Objekte und Dokumente kann der Operator Handlungsanweisungen (und ggf. weitere Kommentare, Hinweise, Informationen usw.) hinterlegen, hier z.B. für das Prozessobjekt MonAnS-T1 eine Anweisung A1 mit dem Text "Prüfe den Füllstand des Tanks auf Überschreiten von 400 Liter. Falls diese Höhe unterschritten wird, schließe Ablaufventil Vlv2"

In einem weiteren Abschnitt kann nun eine Bedingung für die jeweilige Anweisung definiert und hinterlegt werden. Im Ausführungsbeispiel wird davon ausgegangen, dass die Bedingung ein Ereignis in Form eines Auftretens eines Alarms darstellt. Wie bereits erläutert, sind aber auch andere Bedingungen bzw. Ereignisse möglich.

e)

## AP (= Verknüpfte Alarmpfade):

Hier kann die Operatoraktivität mit Alarmpfaden assoziiert werden. Die Alarmpfade können über Ausrüstung im Abschnitt E definiert und hinzugefügt werden. Tritt unterhalb der Alarmpfade ein Alarm auf, wird unmittelbar oder mittelbar (über eine Benachrichtigung) die angelegte Anweisung für eine Operatoraktivität ausgegeben, die beschreibt mit welchen Objekten und Dokumenten (d.h. den in Abschnitt SOD selektierten Objekten und Dokumenten) und mit welcher Vorgehensweise gemäß Abschnitt A der Alarm behandelt werden kann.

Hier sind beispielhaft zwei Alarmpfade AP1 (z.B. Anlage1/Teilanlage1/Mischer1) und AP2 (z.B. Anlage1/Teilanlage1/ Ablauf1) dargestellt.

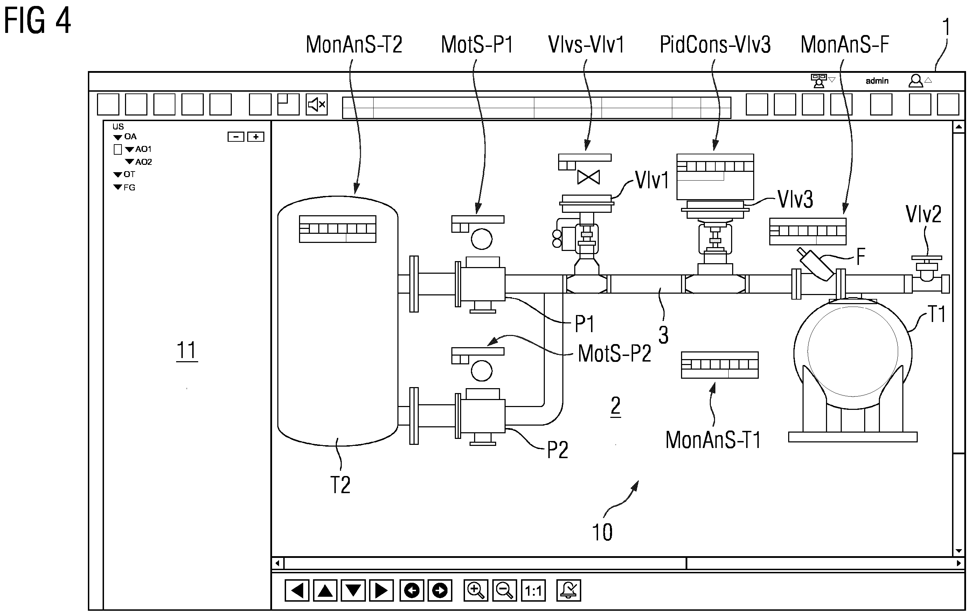

Tritt nun - wie in FIG 4 dargestellt ist - ein Alarm auf, der durch seinen Alarmpfad mit einer oder mehreren Operatoraktivitäten assoziiert werden kann, wird in der grafischen Darbietung 1 die Anwenderselektionssicht 11 (nur notwendig, falls der Baum der Anwenderselektionen geschlossen ist und stattdessen die Bildhierarchie dargestellt wird) geöffnet und darin die jeweils betroffenen Anwenderselektionen für Operatoraktivitäten farblich hervorgehoben. In FIG 4 bezieht sich der Alarm beispielsweise auf den Überwachungsbaustein MonAnS-T1 für einen analogen Messwert des Füllstands im Tank T1 und somit auf die Operatoraktivität AO1.

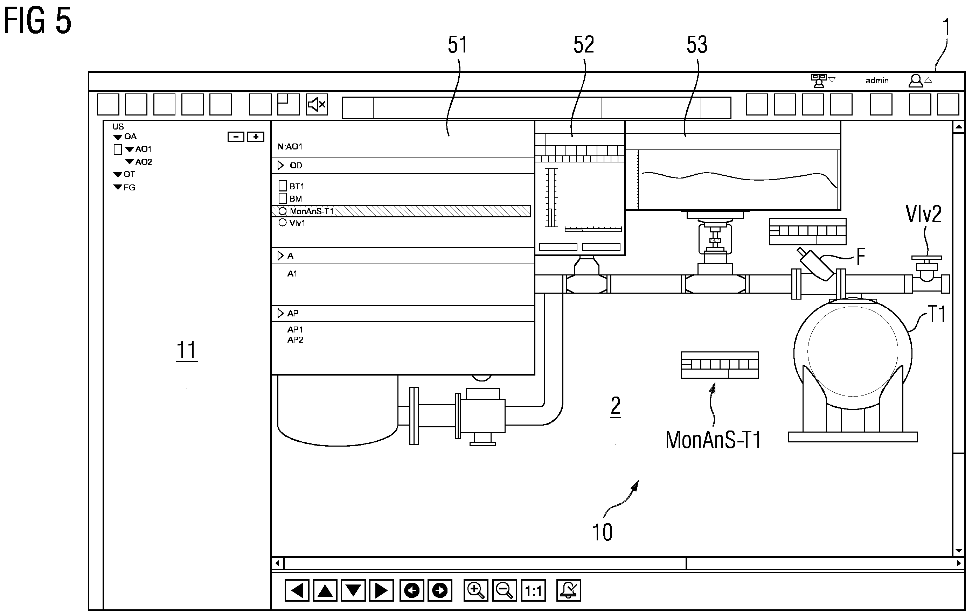

Wie in FIG 5 dargestellt ist, kann der Operator nun in der Anwenderselektionssicht 11 die mit dem Alarm (oder den Alarmen) assoziierte Operatoraktivität AO1 für die Alarmbehandlung öffnen, in dem er durch Klicken auf die Operatoraktivität AO1 den Operator Station Client 61 dazu auffordert. In der grafischen Darbietung 1 öffnet sich dann ein Ausgabefenster 51, dem der Operator die Anweisung für die Operatoraktivität entnehmen kann. Das Ausgabefenster 51 umfasst beispielsweise die folgenden Abschnitte:

a)

N (= Name):

Name der Anweisung für eine Operatoraktivität, hier AO1 (z.B. "Bei Tankfüllstand niedrig")
b)

OD (= Objekte und Dokumente):

Objekte und Dokumente, die für die Behandlung des Alarms notwendig sind.
c)

A (= Handlungsanweisungen):

Für ein im Abschnitt OD ausgewähltes Objekt oder Dokument (hier das Prozessobjekt MonAnS-T1) die jeweils hinterlegte Handlungsanweisung für die Behandlung des Alarms, hier beispielsweise die Anweisung A1.

Für eine effiziente Navigation zu den Objekten und Dokumenten des Abschnitts OD werden Loop-Ins angeboten, so dass der Operator unmittelbar aus dem Dialog heraus beispielsweise das Faceplate eines Prozessobjekts aufschlagen oder in einem Bildfenster ein zugewiesenes Anlagenbild öffnen kann. Im Fall von FIG 5 kann der Operator durch Auswahl des Objektes MonAns-T1 im Abschnitt OD beispielsweise ein Faceplate 52 des Objektes und einen Trendverlauf 53 der analogen Prozessgröße öffnen.

In FIG 6 ist das Leitsystem 60 für die Prozessanlage schematisch dargestellt. Das Leitsystem 60 umfasst den zuvor bereits genannten Operator Station Client 61 und den Operator Station Server 62. Der Operator Station Server 62 und der Operator Station Client 61 sind über einen Terminalbus 63 miteinander und optional mit nicht dargestellten weiteren Komponenten des Leitsystems 60 wie einem Engineering Station Server oder einem Archivserver verbunden.

Ein Benutzer bzw. Operator kann zum Zwecke des Bedienens und Beobachtens über den Operator Station Client 61 mittels des Terminalbus 63 auf den Operator Station Server 62 zugreifen.

Der Terminalbus 63 kann, ohne sich darauf zu beschränken, beispielsweise als Industrial Ethernet ausgebildet sein.

Der Operator Station Server 62 weist eine Geräteschnittstelle 64 auf, die mit einem Anlagenbus 65 verbunden ist. Über diese Geräteschnittstelle 64 kann der Operator Station Server 62 mit einem Automatisierungsgerät 66 sowie mit optional vorhandenen weiteren Komponenten der verfahrenstechnischen Anlage wie Peripheriegeräten (nicht dargestellt) kommunizieren. Der Anlagenbus 65 kann, ohne sich darauf zu beschränken, beispielsweise als Industrial Ethernet ausgebildet sein.

Auf dem Operator Station Server 62 sind (unter anderem) ein Visualisierungsdienst 70, ein Prozessabbild 71 und ein Speicher 72 implementiert. Der in dem Operator Station Server 62 integrierte Visualisierungsdienst 70 initiiert eine Übertragung von Visualisierungsinformationen an den Operator Station Client 61. Der Operator Station Client 61 ist dazu ausgebildet, die grafische Darbietung 1, insbesondere von Anlagenbildern, zum Bedienen und Beobachten der Prozessanlage darzustellen.

In dem Prozessabbild 71 (POI = Process Output Image) des Operator Station Servers 62 ist eine Momentaufnahme der (Signal-)Zustände von mit dem Operator Station Server 62 verbundenen Geräten und/oder Applikationen, hier beispielsweise des Automatisierungsgerätes 66, hinterlegt (veranschaulicht durch den Pfeil 80). Das Automatisierungsgerät 66 umfasst hierzu beispielsweise ein Continuous Function Chart CFC-C für einen PID-Regler-Baustein "pidcons_1" und ein Continuous Function Chart CFC-M für einen Ansteuerbaustein "MotS_Type 1" eines Pumpenmotors.

Ein Alarmdienst 73 kann Alarmmeldungen aus dem Prozessabbild 71 auslesen (wie durch einen Pfeil 81 veranschaulicht wird) und beispielsweise eine grafische Aggregation der Alarmmeldungen erzeugen, die der Operator Station Client 61 dem Operator darbieten kann.

Ein Benutzerauswahldienst 75 hat Zugriff auf den Speicher 72 (veranschaulicht durch einen Pfeil 82) des Operator Station Servers 62. Dort können Anwenderprofile und persönliche Einstellungen von Operatoren/Bedienern der Prozessanlage hinterlegt werden. Diese können auch für weitere Operatoren/Bediener zugänglich sein.

Wie beschreiben sind die Anwenderselektionen um die neue Kategorie der "Operatoraktivitäten" erweitert, die über den Benutzerauswahldienst 75, die Anwenderselektionssicht 11 und das Dialogfenster 33 für Operatoraktivitäten konfiguriert und genutzt werden können (siehe Pfeile 83, 84, 85). Der Benutzerauswahldienst 75 hat hierzu Zugriff auf die Anwenderselektionssicht 11, über die der Operator, wie anhand der Figuren 2 und 3 erläutert wurde, die Anweisungen für Operatoraktivitäten und Bedingungen für die automatisierte Ausgabe der Anweisungen in der grafischen Darbietung des Operator Station Clients 61 mit Hilfe des Dialogfensters 33 vorgibt. Der Operator Station Server 62 hinterlegt diese Daten nach dem Empfang von dem Operator Station Client 61 in dem Speicher 72.

Für die Konfiguration der Anweisungen für die Operatoraktivitäten wird der Benutzerauswahldienst 75 mit einer Datenbank 78, in der die aktuelle technologische Hierarchie der Anlage hinterlegt ist (beispielsweise eine sogenannten "Equipment Hierarchie (EQH) Online") verbunden (assoziiert), so dass der Operator wie beschrieben in dem Dialogfenster 33 Objekte, Dokumente und Pfade wählen kann. Dies ist durch den Pfeil 87 veranschaulicht.

Um aus einer Operatoraktivität heraus Objekte oder Dokumente öffnen zu können, ist der Benutzerauswahldienst 75 weiterhin mit der DCS DL 76 (für Prozessobjekte, Schrittketten, usw.) und der Display Hierarchy (BL) 77 verbunden, was durch die Pfeile 88, 89 veranschaulicht ist. "DCS DL" steht für eine Distributed Control System Domain Logic. Diese dynamisiert verfahrenstechnische Symbole in den Anlagenbildern, wie z.B. die Block Symbole und Faceplates von Prozessobjekten. Der Benutzerauswahldienst 75 kann die DCS DL 76 ansprechen, um beispielsweise ein Faceplate aufzuschlagen (symbolisiert durch den Pfeil 88). Die "Display Hierarchy (BL) 77 ist die Business Logic der Anlagenbildhierarchie. Sie stellt für die Navigation zwischen den Anlagenbilder die Anlagenbildhierarchie bereit und dynamisiert diese mit dem Gruppenalarmstatus der Anlagenbilder aus den darin enthaltenen alarmgebenden Prozessobjekten. Über eine Anwahl eines Anlagenbildes in der Anlagenbildhierarchie kann der Operator einen Anlagenbildwechsel anstoßen.

Der Benutzerauswahldienst 75 prüft dabei automatisiert, ob die in dem Speicher 72 hinterlegten Bedingungen für eine Anweisung für eine Operatoraktivität erfüllt sind und initiiert, für den Fall, dass eine der Bedingungen erfüllt ist, die Ausgabe der Anweisung, indem er den Operator Station Client 61 entsprechend zur Ausgabe einer Benachrichtigung (siehe FIG 4) oder der unmittelbaren Anweisung mit Hilfe des Fensters 51 (siehe FIG 5) triggert.

Da sich im Ausführungsbeispiel die Bedingung auf ein Auftreten eines Alarms bezieht, erhält der Benutzerauswahldienst 75 einen Zugriff auf das Alarmmanagement (über den Alarmdienst 73), um sich auf Alarme der konfigurierten Alarmpfade anmelden zu können, so dass beim Auslösen eines Alarms der Benutzerauswahldienst 75 entsprechend notifiziert werden kann, um die beschriebenen Anweisungen für Operatoraktivtäten bzw. Benachrichtigungen durch den Operator Station Client 61 grafisch darbieten zu können.

Wie ersichtlich ist, können die beschriebenen Operatoraktivitäts-Anwenderselektionsdienste somit flexibel zur Laufzeit angelegt, entfernt, optimiert und auch auf den jeweiligen Lebenszyklus der Anlage zugeschnitten werden. Insbesondere bei modularisierten Anlagen, welche beispielsweise durch den Austausch von Package Units in ihrem Lebenszyklus kontinuierlich partiell rekonfiguriert werden, ist dies vorteilhaft.

Durch die beschriebene Assoziation von Alarmbereichen mit den Anwenderselektionsdiensten ist folglich ein besseres Alarmmanagement möglich. Für die jeweils relevanten Objekte und Dokumente sind unmittelbare Loop-Ins zur Effizienzverbesserung möglich.

Aber auch ohne Assoziation mit Alarmbereichen sind die durch diese Erfindung möglichen neuen Kategorien von Anwenderselektionen nutzbar, um z.B. Abläufe, Routinehandlungen, Einstellungen, zyklische Prüfungen, usw. zu dokumentieren, zu koordinieren und zu optimieren.

**Patentansprüche**

1. Leitsystem (60) für eine technische Anlage, insbesondere Fertigungs- oder Prozessanlage, das wenigstens einen Operator Station Server (62) und wenigstens einen mit dem Operator Station Server verbundenen Operator Station Client (61) umfasst, wobei der Operator Station Server (62) dazu ausgebildet ist, Visualisierungsinformationen an den Operator Station Client (61) zu übertragen,

   und wobei der Operator Station Client (61) dazu ausgebildet ist, mittels der Visualisierungsinformationen eine grafische Darbietung (1) für einen Operator der technischen Anlage zu erzeugen, **dadurch gekennzeichnet, dass**
   der Operator Station Client (61) dazu ausgebildet ist, zur Laufzeit der Anlage eine von dem Operator vorgebbare Anweisung für eine Operatoraktivität in Bezug auf die Anlage und eine von dem Operator vorgebbare Bedingung für die Anweisung entgegenzunehmen und an den Operator Station Server (62) zu übermitteln, wobei die Bedingung einen internen Zustand der Anlage betrifft und wobei die Anweisung für eine Operatoraktivität eine Führung für eine Interaktion mit dem Leitsystem (60) ist,
   und wobei der Operator Station Server (62) dazu ausgebildet ist, die von dem Operator Station Client (61) empfangene Anweisung und Bedingung in einem Speicher (72) zu hinterlegen und zu prüfen, ob die Bedingung erfüllt ist.

2. Leitsystem (60) gemäß Anspruch 1, wobei sich die Anweisung auf von dem Operator zur Laufzeit der Anlage vorgebbare Objekte (MonAns-T1, Vlv1) und/oder Dokumente der Anlage bezieht.

3. Leitsystem (60) gemäß Anspruch 1 oder 2, bei dem der Operator Station Server (62) dazu ausgebildet ist, für den Fall, dass die Bedingung erfüllt ist, die Visualisierungsinformationen derart zu modifizieren, dass die graphische Darbietung (1) des Operator Station Client (61) die Anweisung ausgibt.

4. Leitsystem (60) gemäß Anspruch 1 oder 2, bei dem der Operator Station Server (62) dazu ausgebildet ist, für den Fall, dass die Bedingung erfüllt ist, die Visualisierungsinformationen derart zu modifizieren, dass die graphische Darbietung (1) des Operator Station Client (61) eine Benachrichtigung über die Anweisung ausgibt.

5. Leitsystem (60) gemäß Anspruch 4, bei dem der Operator Station Client (61) dazu ausgebildet ist, eine Aufforderung des Operators für eine Ausgabe der Anweisung zu empfangen und an den Operator Station Server (62) zu übermitteln, wobei der Operator Station Server (62) ausgebildet ist, nach Empfang der Aufforderung die Visualisierungsinformationen derart zu modifizieren, dass die graphische Darbietung (1) des Operator Station Client (61) die Anweisung ausgibt.

6. Leitsystem (60) gemäß einem der vorangegangenen Ansprüche, bei dem die grafische Darbietung (1) ein Anlagenbild (2) mit grafischen Repräsentanten von Objekten (T1, T2, P1, P2, MonAnS-T1) der technischen Anlage umfasst.

7. Leitsystem (60) gemäß einem der vorangegangenen Ansprüche, bei dem die Bedingung ein Ereignis oder eine logische Verknüpfung einer Mehrzahl von Ereignissen darstellt.

8. Leitsystem (60) gemäß Anspruch 7, bei dem ein Ereignis ein Auftreten eines Alarms darstellt.

9. Leitsystem (60) gemäß Anspruch 8, bei dem sich der Alarm auf ein von dem Operator zur Laufzeit der Anlage vorgebbares Objekt (T1, T2, P1, P2, MonAnS-T1) der Anlage bezieht.

10. Verfahren zum Betreiben eines Leitsystems (60) einer technischen Anlage, insbesondere Fertigungs- oder Prozessanlage, das wenigstens einen Operator Station Server (62) und wenigstens einen Operator Station Client (61) umfasst, wobei der Operator Station Server (62) dazu ausgebildet, Visualisierungsinformationen an den Operator Station Client (61) zu übertragen,
und wobei der Operator Station Client (61) dazu ausgebildet ist, mittels der Visualisierungsinformationen eine grafische Darbietung (1) für einen Operator der technischen Anlage zu erzeugen, **dadurch gekennzeichnet, dass** das Verfahren umfasst:

   a) Von einem Operator der technischen Anlage entgegennehmen einer Anweisung für eine Operatoraktivität in Bezug auf die Anlage und einer Bedingung für die Anweisung durch den Operator Station Client (61), wobei die Bedingung einen internen Zustand der Anlage betrifft und wobei die Anweisung für eine Operatoraktivität eine Führung für eine Interaktion mit dem Leitsystem (60) ist,
   b) Übertragen der Anweisung und der Bedingung von dem Operator Station Client (61) an den Operator Station Server (62),
   c) Hinterlegen der Anweisung und der Bedingung in einem Speicher (72),
   d) Prüfen der Erfüllung der Bedingung durch den Operator Station Server (62).

11. Verfahren gemäß Anspruch 10, wobei sich die Anweisung auf von dem Operator zur Laufzeit der Anlage vorgebbare Objekte (MonAns-T1, Vlv1) und/oder Dokumente der Anlage bezieht.

12. Verfahren gemäß Anspruch 10 oder 11, bei dem der Operator Station Server (62) für den Fall, dass die Bedingung erfüllt ist, die Visualisierungsinformationen derart modifiziert, dass die graphische Darbietung (1) des Operator Station Client (61) die Anweisung ausgibt.

13. Verfahren gemäß Anspruch 10 oder 11, bei dem der Operator Station Server (62) für den Fall, dass die Bedingung erfüllt ist, die Visualisierungsinformationen derart modifiziert, dass die graphische Darbietung (1) des Operator Station Client (61) eine Benachrichtigung über die Anweisung ausgibt.

14. Verfahren nach Anspruch 13, bei dem der Operator Station Client (61) eine Aufforderung des Operators für eine Ausgabe der Anweisung empfängt und an den Operator Station Server (62) übermittelt, wobei der Operator Station Server (62) nach Empfang der Aufforderung die Visualisierungsinformationen derart modifiziert, dass die graphische Darbietung (1) des Operator Station Client (61) die Anweisung ausgibt.

**Claims**

1.  Control system (60) for a technical plant, in particular a production or process plant, which comprises at least one operator station server (62) and at least one operator station client (61) connected to the operator station server, wherein the operator station server (62) is embodied to transmit visualisation information to the operator station client (61), and wherein the operator station client (61) is embodied to use the visualisation information to generate a graphical presentation (1) for an operator of the technical plant, **characterised in that**

    the operator station client (61) is embodied, at runtime of the plant, to receive an instruction that can be specified by the operator for an operator activity relating to the plant and a condition for the instruction that can be specified by the operator and to transmit it to the operator station server (62), wherein the condition relates to an internal state of the plant and wherein the instruction for the operator activity is a guide for interaction with the control system (60),
    and wherein the operator station server (62) is embodied to store the instruction and condition received from the operator station client (61) in a memory (72) and to check whether the condition is met.

2.  Control system (60) according to claim 1, wherein the instruction relates to objects (MonAns-T1, Vlv1) and/or documents of the plant that can be specified by the operator at runtime of the plant.

3.  Control system (60) according to claim 1 or 2, in which the operator station server (62) is embodied, in the event of the condition being met, to modify the visualisation information such that the graphical presentation (1) of the operator station client (61) outputs the instruction.

4.  Control system (60) according to claim 1 or 2, in which the operator station server (62) is embodied, in the event of the condition being met, to modify the visualisation information such that the graphical presentation (1) of the operator station client (61) outputs a notification of the instruction.

5.  Control system (60) according to claim 4, in which the operator station client (61) is embodied to receive a prompt from the operator for an output of the instruction and to transmit it to the operator station server (62), wherein the operator station server (62) is embodied, after receipt of the prompt, to modify the visualisation information such that the graphical presentation (1) of the operator station client (61) outputs the instruction.

6.  Control system (60) according to one of the preceding claims, in which the graphical presentation (1) comprises a plant image (2) with graphical representatives of objects (T1, T2, P1, P2, MonAnS-T1) of the technical plant.

7.  Control system (60) according to one of the preceding claims, in which the condition represents an event or a logical combination of a plurality of events.

8.  Control system (60) according to claim 7, in which an event represents an occurrence of an alarm.

9.  Control system (60) according to claim 8, in which the alarm relates to an object (T1, T2, P1, P2, MonAnS-T1) of the plant that can be specified by the operator at runtime of the plant.

10. Method for operating a control system (60) of a technical plant, in particular a production or process plant, which comprises at least one operator station server (62) and at least one operator station client (61), wherein the operator station server (62) is embodied to transmit visualisation information to the operator station client (61), and wherein the operator station client (61) is embodied to use the visualisation information to generate a graphical presentation (1) for an operator of the technical plant, **characterised in that** the method comprises:

    a) receiving, from an operator of the technical plant, an instruction for an operator activity relating to the plant and a condition for the instruction by the operator station client (61), wherein the condition relates to an internal state of the plant and wherein the instruction for an operator activity is a guide for interaction with the control system (60),
    b) transmitting the instruction and the condition from the operator station client (61) to the operator station server (62),
    c) storing the instruction and the condition in a memory (72),
    d) checking that the condition is met by the operator station server (62).

11. Method according to claim 10, wherein the instruction relates to objects (MonAns-T1, Vlv1) and/or documents of the plant that can be specified by the operator at runtime of the plant.

12. Method according to claim 10 or 11, in which, in the event of the condition being met, the operator station server (62) modifies the visualisation information such that the graphical presentation (1) of the operator station client (61) outputs the instruction.

13. Method according to claim 10 or 11, in which, in the event of the condition being met, the operator station server (62) modifies the visualisation information such that the graphical presentation (1) of the operator station client (61) outputs a notification of the instruction.

14. Method according to claim 13, in which the operator station client (61) receives a prompt from the operator for an output of the instruction and transmits it to the operator station server (62), wherein, after receipt of the prompt, the operator station server (62) modifies the visualisation information such that the graphical presentation (1) of the operator station client (61) outputs the instruction.

**Revendications**

1. Système (60) de conduite d'une installation technique, en particulier une installation de fabrication ou de processus, qui comprend au moins un operator station server (62) et au moins un operator station client (61) raccordé à l'operator station server, dans lequel l'operator station server (62) est constitué pour transmettre des informations de visualisation à l'operator station client (61),

   et dans lequel l'operator station client (61) est constitué pour, au moyen des informations de visualisation, produire une représentation (1) graphique pour un opérateur de l'installation technique, **caractérisé en ce que** l'operator station client (61) est constitué pour, pendant le temps de marche de l'installation, recevoir une instruction, pouvant être donnée par l'opérateur, pour une activité d'opérateur se rapportant à l'installation, et à une condition, pouvant être donnée par l'opérateur, pour l'instruction et les transmettre à l'operator station server (62), dans lequel la condition concerne un état interne de l'installation et dans lequel l'instruction pour une activité d'opérateur est un guidage pour une interaction avec le système (60) de conduite,
   et dans lequel l'operator station server (62) est constitué pour mettre l'instruction reçue par l'operator station client (61) et la condition dans une mémoire (72) et contrôler si la condition est satisfaite.

2. Système (60) de conduite suivant la revendication 1, dans lequel l'instruction se rapporte à des objets (MonAns-T1, V1v1) pouvant être donnés par l'opérateur pour le temps de marche de l'installation et/ou à des documents de l'installation.

3. Système (60) de conduite suivant la revendication 1 ou 2, dans lequel l'operator station server (62) est constitué pour, dans le cas où la condition est satisfaite, modifier les informations de visualisation de manière à ce que la représentation (1) graphique de l'operator station client (61) donne l'instruction.

4. Système (60) de conduite suivant la revendication 1 ou 2, dans lequel l'operator station server (62) est constitué pour, dans le cas où la condition est satisfaite, modifier les informations de visualisation de manière à ce que la représentation (1) graphique de l'operator station client (61) donne une information sur l'instruction.

5. Système (60) de conduite suivant la revendication 4, dans lequel l'operator station client (61) est constitué pour recevoir une invitation de l'opérateur à donner l'instruction et la transmettre à l'operator station server (62), dans lequel l'operator station server (62) est constitué pour, après la réception de l'invitation, modifier les informations de visualisation de manière à ce que la représentation (1) graphique de l'operator station client (61) donne l'instruction.

6. Système (60) de conduite suivant l'une des revendications précédentes, dans lequel la représentation (1) graphique comprend une image (2) d'installation ayant des représentants graphiques d'objets (T1, T2, P1, P2, MonAnS-T1) de l'installation technique.

7. Système (60) de conduite suivant l'une des revendications précédentes, dans lequel la condition représente un évènement ou une combinaison logique d'une pluralité d'évènements.

8. Système (60) de conduite suivant la revendication 7, dans lequel un évènement représente la survenance d'une alerte.

9. Système (60) de conduite suivant la revendication 8, dans lequel l'alerte se rapporte à un objet (T1, T2, P1, P2, MonAnS-T1) de l'installation pouvant être donné à l'avance par l'opérateur pour le temps de marche de l'installation.

10. Procédé pour faire fonctionner un système (60) de conduite d'une installation technique, en particulier d'une installation de fabrication ou d'une installation de processus, qui comprend au moins un operator station server (62) et au moins un operator station client (61), dans lequel l'operator station server (62) est constitué pour transmettre des informations de visualisation à l'operator station client (61),
et dans lequel l'operator station client (61) est constitué pour, au moyen des informations de visualisation, produire une représentation (1) graphique pour un opérateur de l'installation technique, **caractérisé en ce que** le procédé comprend :

a) réception par un opérateur de l'installation technique d'une instruction, pour une activité d'opérateur se rapportant à l'installation, et d'une condition pour l'instruction par l'operator station client (61), dans lequel la condition concerne un état interne de l'installation et dans lequel l'instruction pour une activité d'opérateur est un guidage pour une interaction avec le système (60) de conduite,
b) transmission de l'instruction et de la condition de l'operator station client (61) à l'operator station server (62),
c) mise, dans une mémoire (72), de l'instruction et de la condition,
d) contrôle, par l'operator station server (62), que la condition est satisfaite.

11. Procédé suivant la revendication 10, dans lequel l'instruction se rapporte à des objets (MonAns-T1, V1v1), pouvant être donnés par l'opérateur pour le temps de marche de l'installation et/ou à des documents, de l'installation.

12. Procédé suivant la revendication 10 ou 11, dans lequel l'operator station server (62) est constitué pour, dans le cas où la condition est satisfaite, modifier les informations de visualisation de manière à ce que la représentation (1) graphique de l'operator station client (61) donne l'instruction.

13. Procédé suivant la revendication 10 ou 11, dans lequel l'operator station server (62), après réception de l'invitation, modifie les informations de visualisation, de manière à ce que la représentation (1) graphique de l'operator station client (61) donne l'instruction.

14. Procédé suivant la revendication 13, dans lequel l'operator station client (61) reçoit une invitation de l'opérateur à sortir l'instruction et à la transmettre à l'operator station server (62), dans lequel l'operator station server (62) modifie, après réception de l'invitation, les informations de visualisation, de manière à ce que la représentation (1) graphique de l'operator station client (61) donne l'instruction.

# FIG 1

EP 4 332 699 B1

FIG 2

# FIG 3

US
- ▼ OA
  - ▼ AOA
- ▶ OT
- ▶ FG

N:AOA
- ▶ E
- ▼ A1
  - ☐ BUA
  - ▼ ☐ TA1
    - ☐ BUA1
    - ▼ ☐ T1
      - ☐ BT1
      - ☐ CFC-T1
      - ○ PidCons-Vlv3
    - ▼ ☐ M1
      - ☐ BM1
      - ☐ CFC-M1
      - ○ MonAns-M1
  ⋮
- ▶ SOD
- ☐ BT1
- ☐ BM1
- ○ MonAnS-T1
- ○ Vlv1
- ▶ A
  - A1
- ▶ AP
  - AP1
  - AP2

EP 4 332 699 B1

# FIG 4

EP 4 332 699 B1

FIG 5

EP 4 332 699 B1

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3876046 A1
- EP 3637205 A1
- EP 3913445 A1
- EP 4047433 A1